# EUROPÄISCHE PATENTANMELDUNG

(11) **EP 3 499 674 A1**
(43) Veröffentlichungstag der Anmeldung: **19.06.2019**
(21) Anmeldenummer: 18209960.6
(22) Anmeldetag: 04.12.2018
(51) Int. Cl.: H02J 3/28, H02J 15/00

(54) **TECHNIK ZUM DEZENTRALEN SPEICHERN VON ENERGIE**

(30) Priorität: 13.12.2017 DE 102017129744
(71) Anmelder: i-select SA, 2000 Neuchâtel (CH)
(72) Erfinder: MUHR, Christian, 37351 Kefferhausen (DE)
(74) Vertreter: Lambacher, Michael

(57) **Zusammenfassung**

Es wird ein Verfahren zum dezentralen Speichern von Energie bereitgestellt, wobei die Energie durch wenigstens eine zentral angeordnete Energieerzeugungseinrichtung 200 zur Erzeugung von elektrischer Energie bereitgestellt wird. Das Verfahren umfasst folgende Schritte: Bereitstellen wenigstens einer Wärmespeichervorrichtung 100, wobei die Wärmespeichervorrichtung 100 dezentral zur Energieerzeugungseinrichtung 200 angeordnet wird und mit der Energieerzeugungseinrichtung 200 elektrisch gekoppelt wird; Empfangen eines von der Energieerzeugungseinrichtung 200 bereitgestellten Signals durch die wenigstens eine Wärmespeichervorrichtung 100, wobei das Signal auf das Vorhandensein von überschüssiger elektrischer Energie an der Energieerzeugungseinrichtung 200 hinweist; Detektieren des aktuellen Entladezustands der Wärmespeichervorrichtung 100; und in Reaktion auf das empfangene Signal und den detektierten Entladezustand, Speichern wenigstens eines Teils der von der Energieerzeugungseinrichtung 200 bereitgestellten überschüssigen elektrischen Energie in Form von latenter Wärme in der Wärmespeichervorrichtung 100. Ferner bereitgestellt wird eine Wärmespeichervorrichtung 100 sowie ein System umfassend eine Vielzahl von Wärmespeichervorrichtungen 100 zur Implementierung des obengenannten Verfahrens.

## Beschreibung

### Technisches Gebiet

Die Erfindung betrifft das Gebiet der Speicherung von Energie. Konkret wird eine Technik zum dezentralen Speichern von Energie beschrieben, die durch wenigstens eine zentral angeordnete Energieerzeugungseinrichtung zur Erzeugung von elektrischer Energie bereitgestellt wird.

### Hintergrund

Erneuerbare Energiequellen, wie beispielsweise Photovoltaikanlagen oder Windparks gewinnen immer mehr an Bedeutung. Sie ersetzen schrittweise konventionelle Kraftwerke, wie beispielsweise Atomkraftwerke oder thermische Kraftwerke, die auf der Verbrennung fossiler Energieträger beruhen. Konventionelle Kraftwerke haben den Vorteil, dass sie eine gewünschte Menge an elektrischer Energie jederzeit (also unabhängig von der Tageszeit oder Jahreszeit) erzeugen und in einem Stromnetz einspeisen können. Bei konventionellen Kraftwerken erfolgt die Erzeugung und Einspeisung der elektrischen Energie in das Stromnetz bedarfsabhängig (*on demand*). Um die Endverbraucher jederzeit mit ausreichend elektrischer Energie versorgen zu können, werden zuverlässige Vorhersagemodelle benötigt, die den Energiebedarf im Stromnetz zu jeder Tages- und Jahreszeit vorherzusagen vermögen. Die konventionellen Kraftwerke können entsprechend dem zu erwartenden Energiebedarf betrieben werden.

Die in Zusammenhang mit konventionellen Kraftwerken beschriebene bedarfsabhängige Erzeugung von elektrischer Energie ist mit erneuerbaren Energiequellen, wie beispielsweise Photovoltaikanlagen oder Windkraftanlagen, nur schwer zu realisieren. Denn bei erneuerbaren Energiequellen hängt die Energieerzeugung vom Vorhandensein der natürlichen Energieressourcen, wie beispielsweise der Sonneneinstrahlung bei Photovoltaikanlagen oder der Windstärke bei Windkraftanlagen, ab. Die natürlichen Energieressourcen hängen von der Tageszeit (Tag/Nacht), Jahreszeit und Witterung (Sonnenschein, Regen, Wind) ab und sind vom Menschen nicht zu beeinflussen. Dementsprechend unterliegt die durch die erneuerbaren Energiequellen erzeugte und bereitgestellte elektrische Energiemenge größeren Schwankungen. Beispielsweise kann zu bestimmten Zeiten die durch die erneuerbaren Energiequellen erzeugte elektrische Energie den Energiebedarf der Endverbraucher im Stromnetz bei Weitem übersteigen. Genauso kann es Zeiten geben, an denen aufgrund des Fehlens oder Ausbleibens von natürlichen Energieressourcen (z.B. fehlende Sonneneinstrahlung in den Nachtstunden, ausbleibender Wind) die Energieerzeugung wesentlich geringer ist als der Energieverbrauch.

Um dennoch eine effiziente Nutzung von erneuerbaren Energiequellen zu ermöglichen, ist es daher wünschenswert, bei der Erzeugung auftretende ungenutzte Energieproduktionsspitzen zwischen zu speichern und in Zeiten geringer Energieerzeugung den Endverbrauchern zur Verfügung zu stellen. Zur Speicherung von überschüssiger Energie oder Energiespitzen kommen bevorzugt chemische Batteriezellen zum Einsatz. Diese sind jedoch teuer in der Anschaffung. Ferner nimmt die Speicherkapazität von Batteriezellen mit jedem neuen Ladezyklus ab. Bekannt ist ferner, die überschüssige Energie aus erneuerbaren Energiequellen mittels Wasserspeicherkraftwerken zwischen zu speichern.

Aufgabe der vorliegenden Erfindung ist es, eine alternative Speichertechnik bereitzustellen, die dazu ausgelegt ist, überschüssige elektrische Energie, die bevorzugt durch erneuerbare Energiequellen erzeugt wird, flexibel, langfristig und verlustfrei zu speichern.

### Kurzer Abriss

Diese Aufgabe wird gemäß einem ersten Aspekt durch ein Verfahren zum dezentralen Speichern von Energie gelöst, die durch wenigstens eine zentral angeordnete Energieerzeugungseinrichtung zur Erzeugung von elektrischer Energie bereitgestellt wird. Das erfindungsgemäße Verfahren umfasst hierbei folgende Schritte: Bereitstellen wenigstens einer Wärmespeichervorrichtung, wobei die Wärmespeichervorrichtung dezentral zur Energieerzeugungseinrichtung angeordnet wird und mit der Energieerzeugungseinrichtung elektrisch gekoppelt wird; Empfangen eines von der Energieerzeugungseinrichtung bereitgestellten Signals durch die wenigstens eine Wärmespeichervorrichtung, wobei das Signal auf das Vorhandensein von überschüssiger elektrischer Energie an der Energieerzeugungseinrichtung hinweist; Detektieren des aktuellen Entladezustands der Wärmespeichervorrichtung; und in Reaktion auf das empfangene Signal und den detektierten Ladezustand, Speichern wenigstens eines Teils der von der Energieerzeugungseinrichtung bereitgestellten überschüssigen elektrischen Energie in Form von latenter Wärme in der Wärmespeichervorrichtung.

Mit zentral angeordneter Energieerzeugungseinrichtung ist eine Energieerzeugungs-einrichtung gemeint, die von den Endverbrauchern räumlich entfernt angeordnet ist. Als Energieerzeugungseinrichtung kann hierbei eine Windkraftanlage (z.B. ein Windpark), ein Solarkraftwerk (z.B. eine Photovoltaikanlage) oder eine anderweitige Energieerzeugungseinrichtung zum Einsatz kommen, die unter Ausnutzung erneuerbarer Energien, elektrische Energie in großen Mengen zu erzeugen vermag. Die Energieerzeugungseinrichtung kann jedoch auch ein konventionelles Kraftwerk umfassen, wie beispielsweise ein Atomkraftwerk oder ein thermisches Kraftwerk.

Mit überschüssiger elektrischer Energie ist jene durch die Energieerzeugungseinrichtung erzeugte elektrische Energie oder Energieanteil gemeint, die bzw. der von den Endverbrauchern am Zeitpunkt der Erzeugung nicht unmittelbar verbraucht wird. Ob zu einem vorgegeben Zeitpunkt überschüssige Energie erzeugt wird, hängt somit von der durch die Energieerzeugungseinrichtung erzeugten und bereitgestellten Energiemenge und von der durch die Endverbraucher konsumierten Energiemenge zum vorgegebenen Zeitpunkt ab. Energieüberschüsse können bei einer regenerativen Energieerzeugungseinrichtung insbesondere dann auftreten, wenn die für die regenerative Energieerzeugungseinrichtung relevanten Witterungsparameter, wie beispielsweise die Sonneneinstrahlungsintensität bei Photovoltaikanlagen oder die Windstärke und Windrichtung bei Windrädern, für die Energieerzeugungseinrichtung optimale Werte annehmen. In diesem Fall kann die regenerative Energieerzeugungseinrichtung ihre maximale Energieproduktion erreichen, und damit einhergehend die Erzeugung einer der Energieerzeugungseinrichtung entsprechenden maximalen Energiemenge (sogenannte Energieproduktionsspitzen). Bei auftretenden Energieproduktionsspitzen kann ein erheblicher Energieüberschuss vorliegen, der von den Endverbrauchern nicht unmittelbar verbraucht wird.

Die wenigstens eine Wärmespeichervorrichtung ist dezentral zur Energieerzeugungseinrichtung angeordnet. Dezentral bedeutet in diesem Zusammenhang, dass die Wärmespeichervorrichtung bei oder in der Nähe eines Endverbrauchers angeordnet (bzw. installiert) ist. Im Gegensatz zur zentral angeordneten Energieerzeugungseinrichtung, die zur zentralen Versorgung einer Vielzahl von Endverbrauchern vorgesehen ist, ist die wenigstens eine dezentral angeordnete Wärmespeichervorrichtung dazu vorgesehen, den Endverbraucher vor Ort mit Wärmeenergie zu versorgen. Sind mehrere Wärmespeichervorrichtungen vorgesehen, so können diese voneinander beabstandet und auf mehrere Endverbraucher verteilt angeordnet sein.

Der Schritt des Speicherns von wenigstens einem Teil der von der Energieerzeugungseinrichtung bereitgestellten überschüssigen elektrischen Energie in Form von latenter Wärme kann ferner ein Abgreifen und Umwandeln der elektrischen Energie in Wärmeenergie umfassen. Die Umwandlung der elektrischen Energie kann lokal an der wenigstens einen Energieerzeugungseinrichtung erfolgen. Hierfür kann die Energieerzeugungseinrichtung eine Energieumwandlungseinheit umfassen, die dazu ausgebildet ist, elektrische Energie in Wärmeenergie umzuwandeln. Als Energieumwandlungseinheit kann beispielsweise ein Heizstab, eine Heizwendel oder ein anderweitiges mit elektrischer Energie heizbares Element zum Einsatz kommen.

Die elektrische Kopplung zwischen der zentral angeordneten Energieerzeugungseinrichtung und der wenigstens einen dezentral angeordneten Wärmespeichervorrichtung kann über ein bestehendes (konventionelles) Stromnetz erfolgen.

Das Vorhandensein von überschüssiger elektrischer Energie (z.B. bei Energieproduktionsspitzen) kann hierbei von der zentral angeordneten Energieerzeugungseinrichtung an die wenigstens eine dezentral angeordnete Wärmespeichervorrichtung signalisiert werden. Die Signalisierung kann über ein Signal erfolgen. Dieses kann über ein separates Netzwerk (z.B. über das Internet via IP-Signal) oder über das Stromnetz an die wenigstens eine Wärmespeichervorrichtung kommuniziert werden.

Das Speichern von wenigstens einem Teil der von der Energieerzeugungseinrichtung bereitgestellten überschüssigen elektrischen Energie in Form von Wärme kann nur dann erfolgen, wenn die wenigstens eine dezentral angeordnete Wärmespeichervorrichtung zur Speicherung der überschüssigen elektrischen Energie bereit ist. In der Regel wird die Bereitschaft von der wenigstens einen dezentral angeordneten Wärmespeichervorrichtung nur dann vorhanden sein, wenn der Entladezustand der wenigstens einen Wärmespeichervorrichtung wenigstens einen vorgegebenen Schwellenwert erreicht oder übersteigt.

Die wenigstens eine Wärmespeichervorrichtung kann der zentralen Energieerzeugungseinrichtung ihre Bereitschaft zur Abnahme von überschüssiger elektrischer Energie signalisieren. Die Signalisierung der Bereitschaft zur Abnahme überschüssiger Energie kann in Reaktion auf ein von der Energieerzeugungseinrichtung empfangenes Signal, das auf das Vorhandensein von überschüssiger Energie hinweist, erfolgen. Die wenigstens eine Wärmespeichervorrichtung kann die Bereitschaft zur Abnahme von überschüssiger Energie mittels eines Signals (Responsesignals) an die zentral angeordnete Energieerzeugungseinrichtung kommunizieren. Neben der Bereitschaft kann das Responsesignal auch Informationen über die Energiemenge enthalten, die sie von der zentralen Energieerzeugungseinheit abnehmen und speichern kann. Die durch die Wärmespeichervorrichtung abnehmbare Energiemenge hängt vom Entladezustand der Wärmespeichervorrichtung ab.

Um die Bereitschaft des Speicherns von überschüssiger Energie in Form von Wärmeenergie festzustellen, kann das Verfahren ferner ein Detektieren eines aktuellen Entladezustands der wenigstens einen Wärmespeichervorrichtung umfassen. Dieser Schritt des Detektierens des aktuellen Entladezustands der wenigstens einen Wärmespeichervorrichtung kann in Reaktion auf ein von der zentralen Energieerzeugungseinrichtung empfangenes Signal hin durchgeführt werden. Elektrische Energie kann somit immer dann vom Stromnetz abgegriffen und in Wärmeenergie umgewandelt werden, wenn die Wärmespeichervorrichtung einen Entladezustand aufweist, der die Aufnahme einer Mindestmenge an Energie ermöglicht.

Das Verfahren kann ferner ein bedarfsabhängiges Bereitstellen der in der wenigstens einen Wärmespeichervorrichtung gespeicherten Wärmeenergie an einen lokalen Endverbraucher umfassen. Mit anderen Worten kann gemäß dem vorliegenden Verfahren überschüssige elektrische Energie in Form von Wärmeenergie dezentral gespeichert und bei Bedarf an einen dezentralen Endverbraucher wieder abgegeben werden.

Gemäß einer Implementierung können eine Vielzahl von dezentral angeordneten und mit der Energieerzeugungseinrichtung elektrisch gekoppelten Wärmespeichervorrichtungen bereitgestellt werden. Jede der Vielzahl der Wärmespeichervorrichtungen kann das von der Energieerzeugungseinrichtung bereitgestellte Signal empfangen, seinen aktuellen Entladezustand detektieren, und in Reaktion auf das empfangene Signal und seinen detektierten Ladezustand, wenigstens einen Teil der von der Energieerzeugungseinrichtung bereitgestellten überschüssigen elektrischen Energie in Form von Wärmeenergie speichern.

Gemäß einem weiteren Aspekt wird eine Vorrichtung zur Speicherung von Energie bereitgestellt, wobei die Vorrichtung über ein Stromnetz mit wenigstens einer zentral angeordneten Energieerzeugungseinrichtung zur Erzeugung von elektrischer Energie koppelbar ist. Die Vorrichtung umfasst: einen Empfänger, der dazu ausgebildet ist, ein von der Energieerzeugungseinrichtung bereitgestelltes Signal zu empfangen, wobei das Signal auf das Vorhandensein von überschüssiger elektrischer Energie an der Energieerzeugungseinheit hinweist; eine Sensoreinheit, die dazu ausgebildet ist, einen aktuellen Entladezustand der Wärmespeichervorrichtung zu detektieren; eine Wärmespeichereinheit, die dazu ausgebildet ist, Wärmeenergie in Form von latenter Wärme zu speichern; und eine Steuereinheit, die dazu ausgebildet ist, auf der Grundlage des empfangenen Signals und des detektierten Entladezustands, die Wärmespeichereinheit derart anzusteuern, dass sie wenigstens einen Teil der von der Energieerzeugungseinrichtung bereitgestellten überschüssigen elektrischen Energie in Form von latenter Wärme speichert.

Die Wärmespeichervorrichtung ist als Latentwärmespeichervorrichtung ausgebildet. Sie umfasst ein Latentwärmespeichermedium, das dazu vorgesehen ist, Energie in Form von latenter Wärme zu speichern. Als Latentwärmespeichermedium kann ein Salzhydrat, bevorzugt Natriumacetat-Trihydrat, zum Einsatz kommen. Derartige Salzhydrate haben sich bewährt, da sie einerseits günstig in der Anschaffung sind, und andererseits eine hohe Wärmespeicherfähigkeit aufweisen. Durch die Speicherung der Wärme in Form von latenter Wärme ist es insbesondere möglich, Energie in Form von Wärme verlustfrei und langfristig zu speichern.

Die Wärmespeichervorrichtung kann ferner eine Energieumwandlungseinheit umfassen, die dazu ausgebildet ist, elektrische Energie in Wärmeenergie zu wandeln. Eine derartige Energieumwandlungseinheit kann beispielsweise ein Heizstab sein, der sich im stromdurchflossenen Zustand aufheizt und Wärme nach außen freisetzt. Die Energieumwandlungseinheit dann hierbei mit dem Latentwärmespeichermedium der Wärmespeichervorrichtung (thermisch) gekoppelt sein. Somit wird die durch die Energieumwandlungseinheit erzeugte Wärme direkt (also ohne Zwischenverluste) an das Latentwärmespeichermedium abgegeben. Alternativ ist auch denkbar, dass die Energieumwandlungseinheit mit einem Wärmeträgermedium der Wärmespeichervorrichtung (thermisch) gekoppelt ist. Die durch die Energieumwandlungseinheit erzeugte Wärme wird dann zunächst an das Wärmeträgermedium und anschließend vom Wärmeträgermedium an das Latentwärmespeichermedium abgegeben. Als Wärmeträgermedium kann hierbei Wasser, Öl oder ein anderweitiges Trägermittel zum Einsatz kommen.

Als Empfänger kann ein herkömmlicher Signalempfänger zum Einsatz kommen, welcher dazu ausgerichtet ist, ein drahtloses oder drahtgebundenes Signal zu empfangen (und zu decodieren).

Als Sensoreinheit kann ein Wärmeenergieverbrauchszähler zum Einsatz kommen, der die am Latentwärmespeicher abgegriffene (und zugeführte) Wärmeenergie misst. Aus der gemessenen abgegriffenen Wärmeenergie sowie aus der Kenntnis der maximalen Energiekapazität der Wärmespeichervorrichtung kann der aktuelle Entladungszustand der Wärmespeichervorrichtung ermittelt werden.

Die Steuereinheit kann ferner dazu ausgebildet sein, in Reaktion auf das erfasste Signal und den detektierten Entladungszustand, die Energieumwandlungseinheit derart anzusteuern, dass sie wenigstens einen Teil der im Stromnetz bereitgestellten überschüssigen elektrischen Energie abgreift und in Wärmeenergie umwandelt. Mit anderen Worten kann die Steuereinheit auf der Grundlage des detektierten Entladungszustands berechnen, wieviel überschüssige Energie überhaupt durch die Wärmespeichervorrichtung gespeichert werden kann. Basierend auf dieser Berechnung kann die Steuereinheit der Energieumwandlungseinheit mitteilen, wie viel elektrische Energie sie vom Stromnetz abgreifen soll.

Gemäß einem weiteren Aspekt wird ein System zur dezentralen Speicherung von elektrischer Energie in Form von Wärmeenergie bereitgestellt. Das System umfasst eine Vielzahl von Wärmespeichervorrichtungen, wie oben beschrieben, wobei die Vielzahl der Wärmespeichervorrichtungen dezentral zu einer oder mehreren elektrischen Energieerzeugungseinrichtungen angeordnet sind und mit dieser über ein (konventionelles) Stromnetz elektrisch gekoppelt sind.

Gemäß einer Variante ist jede der Wärmespeichervorrichtungen des Systems bei einem Energieendverbraucher angeordnet. Energieendverbraucher können herkömmliche Haushalte, Industrieanlagen oder anderweitige private oder öffentliche Gebäude sein. Durch die dezentrale Anordnung einer Vielzahl von Wärmespeichervorrichtungen kann somit ein Verbund von Wärmespeichervorrichtungen bereitgestellt werden, die über ein bestehendes gemeinsames Stromnetz mit der zentral angeordneten Energieerzeugungsvorrichtung gekoppelt sind. Durch das so erzeugte System oder Netzwerk von dezentral angeordneten Wärmespeichervorrichtungen ist es möglich, überschüssige Energie über eine Vielzahl von Wärmespeichervorrichtungen dezentral und flexibel zu speichern. Die Energieerzeugungseinrichtung kann andererseits überschüssige Energie flexibel über eine Vielzahl von Wärmespeichervorrichtungen verteilen. Das hier beschriebene dezentrale Energiespeichersystem ist somit flexibel in der Anwendung und robust gegen Ausfall, so dass der Ausfall einer Wärmespeichervorrichtung durch die verbleibenden Wärmespeichervorrichtungen kompensiert werden kann.

Gemäß einer Variante kann das hier beschriebene System neben den dezentral angeordneten und über ein Stromnetz miteinander elektrisch gekoppelten Wärmespeichervorrichtungen ferner die Energieerzeugungseinrichtung umfassen. Die Energieerzeugungseinrichtung zur Erzeugung der elektrischen Energie kann eine Energieerzeugungseinrichtung auf der Grundlage von erneuerbaren Energien, wie beispielsweise eine Windparkanlage, eine Photovoltaikanlage, oder aber auch ein konventionelles Kraftwerkwerk, wie beispielsweise ein Atomkraftwerk oder ein thermisches Kraftwerk, sein.

### Beschreibung der Figuren

Weitere Einzelheiten und Vorteile der Erfindung werden anhand von in den Figuren dargestellten Ausführungsformen weiter beschrieben. Es zeigen:
- Figur 1: eine schematische Darstellung eines Energieversorgungsnetzes zur Implementierung der vorliegenden Erfindung;
- Figur 2: ein Blockdiagramm einer erfindungsgemäßen Wärmespeichervorrichtung zum dezentralen Speichern von Energie; und
- Figur 3: ein Flussdiagramm, das ein erfindungsgemäßes Verfahren zum dezentralen Speichern von Energie darstellt.

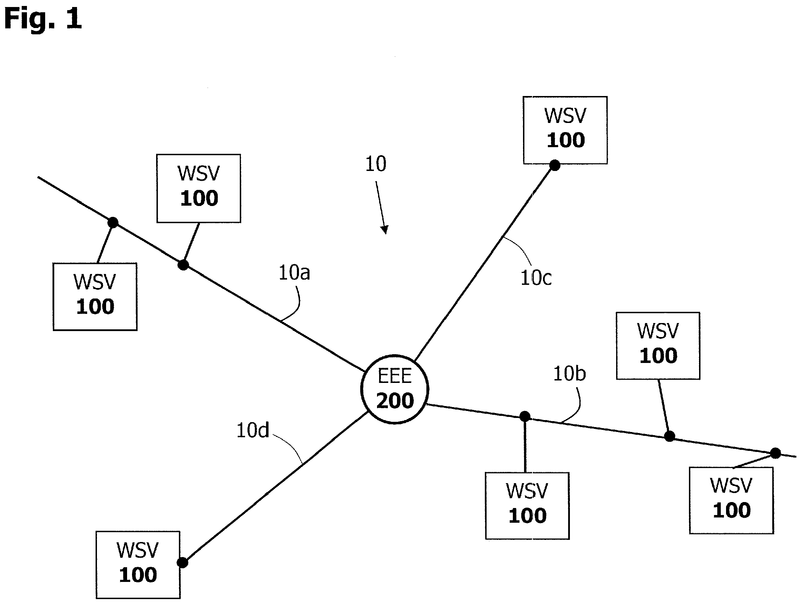

Im Zusammenhang mit Figur 1 wird die vorliegende Erfindung zum dezentralen Speichern von Energie weiter beschrieben. Figur 1 zeigt einen Ausschnitt eines konventionellen Stromnetzes 10 (oder Verbundnetzes) umfassend eine Vielzahl von elektrischen Stromleitungen 10a-10d, die zur Übertragung von elektrischer Energie ausgelegt sind. Mit dem Stromnetz 10 sind wenigstens eine zentral angeordnete Energieerzeugungseinrichtung 200 (in Figur 1 mit der Bezeichnung "EEE" abgekürzt) sowie eine Vielzahl von Wärmespeichervorrichtungen 100 (in Figur 1 mit der Abkürzung "WSV") elektrisch gekoppelt. Die Wärmespeichervorrichtungen 100 sind bezüglich der wenigstens einen Energieerzeugungseinrichtung 200 dezentral angeordnet. Sie sind im oder in der Nähe eines Endverbrauchers (in Figur 1 nicht dargestellt), wie beispielsweise einem privaten oder öffentlichen Gebäude, Fabrikanlagen oder anderweitigen Einrichtungen angeordnet.

Die Energieerzeugungseinrichtung 200 kann ein herkömmliches Kraftwerk oder eine erneuerbare Energiequelle, wie beispielsweise eine Windparkanlage (Offshore oder Onshore Windparkanlage) oder eine großflächige Photovoltaikanlage sein. Die Energieerzeugungseinrichtung 200 ist dazu vorgesehen, elektrische Energie zu erzeugen und in das Stromnetz 10 einzuspeisen.

Die am Ort oder in der Nähe von Endverbrauchern angeordneten Wärmespeichervorrichtungen 100 sind mit dem Stromnetz 10 elektrisch gekoppelt. Sie sind dazu vorgesehen, Energie in Form von Wärmeenergie zu speichern. Sie sind insbesondere dazu vorgesehen, von der wenigstens einen Energieerzeugungseinrichtung 200 bereitgestellte elektrische Energie in entsprechende Wärmeenergie umzuwandeln und langfristig und möglichst verlustfrei zu speichern. Insbesondere sind die Wärmespeichervorrichtungen 100 dazu ausgebildet, von der Energieerzeugungseinrichtung 200 erzeugte überschüssige elektrische Energie in Wärmeenergie zu wandeln und langfristig zu speichern. Jede Wärmespeichervorrichtung 100 ist ferner dazu ausgebildet, die gespeicherte Wärmeenergie an den der Wärmespeichervorrichtung 100 zugeordneten Verbraucher bei Bedarf abzugeben.

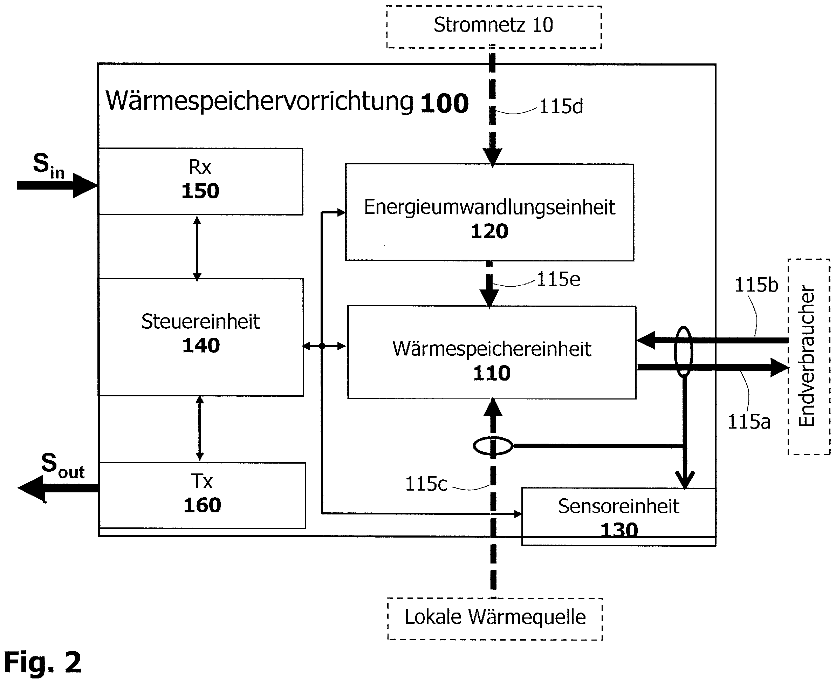

In Zusammenhang mit Figur 2 werden nun die in Figur 1 gezeigten Wärmespeichervorrichtungen 100 weiter beschrieben. Jede Wärmespeichervorrichtung 100 umfasst eine Wärmespeichereinheit 110, eine Energieumwandlungseinheit 120 sowie eine Sensoreinheit 130. Die Wärmespeichervorrichtung 100 umfasst ferner eine Steuereinheit 140 sowie einen Empfänger 150 (mit Rx in Figur 2 abgekürzt). Optional kann die Wärmespeichervorrichtung 100 ferner einen Sender 160 (mit Tx in Figur 2 abgekürzt) umfassen.

Die Wärmespeichereinheit 110 ist als Latentwärmespeichereinheit ausgebildet. Sie ist dazu ausgebildet, Wärmeenergie in Form von latenter (und sensibler) Wärme zu speichern. Die Latentwärmespeichereinheit kann hierfür wenigstens ein Latentwärmespeicherelement umfassen, in dem eine vorgegebene Menge eines Latentwärmespeichermediums gelagert ist (im Blockdiagramm in Figur 2 nicht dargestellt). Das Latentwärmespeichermedium des wenigstens einen Latentwärmespeicherelements ist derart beschaffen, dass es bei Zufuhr von Wärmeenergie seinen Phasenzustand wechselt, und die beim Phasenwechsel benötigte Energie in Form von latenter Wärme speichert. Die Wärmemenge, die in Form von latenter Wärme speicherbar ist, hängt hierbei von der Art und Menge des benutzten Latentwärmespeichermediums ab. Als Latentwärmespeichermedium wird bevorzugt ein Salzhydrat, wie beispielsweise Natriumacetat-Trihydrat, eingesetzt. Es vermag große Mengen an Wärme in Form von latenter Wärme zu speichern.

Das wenigstens eine Wärmespeicherelement der Wärmespeichereinheit 110 ist thermisch mit einem Wärmeträgermedium gekoppelt. Als Wärmeträgermedium kann Wasser zum Einsatz kommen. Beim Aufladen der Wärmespeichereinheit 110 wird über das Wärmeträgermedium dem wenigstens einen Wärmespeicherelement (und somit dem Wärmespeichermedium) Wärme zugeführt. Die zugeführte Wärme wird vom Wärmespeichermedium absorbiert und ganz oder zum größten Teil in Form von latenter Wärme gespeichert. Umgekehrt kann die im Wärmespeichermedium in Form von latenter Wärme gespeicherte Wärmeenergie durch Änderung des Phasenzustands wieder frei werden und an das die Wärmespeicherelemente umgebende Wärmeträgermedium abgeben werden. Die an das Wärmeträgermedium abgeben Wärmeenergie kann dann über einen Wärmeträgermediumkreislauf an einen Endverbraucher (zum Beispiel Heizanlage in einer Wohnung) abgegeben werden. Der Wärmeträgermediumkreislauf, der den Endverbraucher mit der Wärmespeichereinheit 110 fluidisch koppelt, ist im Blockdiagramm der Figur 2 lediglich schematisch durch die Pfeile 115a und 115b (für den Vorlauf und Rücklauf) angedeutet.

Die Wärmespeichereinheit 110 ist ferner mit einer lokalen Wärmequelle, wie beispielsweise einer Solarthermieanlage, thermisch gekoppelt (in Figur 2 lediglich schematisch angedeutet). Die Wärmespeichereinheit 110 kann somit mittels der von der lokalen Wärmequelle bereitgestellten Wärmeenergie aufgeladen werden. Dieser Aufladeprozess ist in Figur 2 durch den gestrichelten Pfeil 115c angedeutet.

Ferner ist die Wärmespeichereinheit 110 über die Energieumwandlungseinheit 120 mit dem in Figur 1 dargestellten herkömmlichen Stromnetz 10 gekoppelt. Die Energieumwandlungseinheit 120 ist dazu vorgesehen, über das Stromnetz 10 bereitgestellte elektrische Energie abzugreifen (Pfeil 115d in Figur 2), in Wärmeenergie umzuwandeln und die umgewandelte Wärmeenergie der Wärmespeichereinheit 110 zuzuführen (Pfeil 115e). Somit kann die Wärmespeichereinheit 110 auch durch Umwandlung von über das Stromnetz 10 bereitgestellter elektrischer Energie in Wärmeenergie aufgeladen werden.

Um elektrische Energie in Wärmeenergie umwandeln zu können, umfasst die Energieumwandlungseinheit 120 wenigstens einen Heizstab oder ein anderweitiges Heizelement, das elektrisch betrieben werden kann und elektrische Energie in Wärme umwandelt. Um die umgewandelte Wärmeenergie möglichst verlustfrei an das Wärmespeichermedium abgeben zu können, kann die Umwandlungseinrichtung mit dem Wärmeträgermedium oder mit dem Wärmespeichermedium in direktem Kontakt stehen.

Die Sensoreinheit 130 ist dazu ausgebildet, die von der Wärmespeichereinheit 110 an einen Endverbraucher abgeführte Wärmemenge zu messen. Sie ist ferner dazu ausgebildet, die der Wärmespeichereinheit 110 über die lokale Wärmequelle und/oder über die Energieumwandlungseinheit 120 zugeführte Wärmemenge zu messen. Wie in Figur 2 angedeutet, ist die Sensoreinheit 130 hierfür mit den entsprechenden Wärmeträgerkreisläufen, welche die Wärmespeichereinheit mit dem Endverbraucher und mit der lokalen Wärmequelle bzw. der Energieumwandlungseinheit 120 fluidisch verbinden, gekoppelt. Aus der Differenz der gemessenen und der Wärmespeichereinheit 110 zugeführten Wärmemenge und der Wärmespeichereinheit 110 entzogenen Wärmemenge kann der Entladezustand bzw. Ladezustand der Wärmespeichereinheit 110 zu jeder Zeit bestimmt werden.

Sender 150 und Empfänger 160 sind zur Kommunikation mit der zentralen Energieerzeugungseinrichtung 200 vorgesehen. Sender 150 und Empfänger 160 können zur drahtlosen bzw. drahtgebundenen Kommunikation (also zum Empfangen bzw. Senden von Kommunikationssignalen) mit der Energieerzeugungseinrichtung 200 ausgebildet sein.

Die Steuereinheit 140 ist in Kommunikation mit der Wärmespeichereinheit 110, der Energieumwandlungseinheit 120 und der Sensoreinheit 130. Die Steuereinheit 140 ist dazu ausgebildet, Sensorsignale von der Sensoreinheit 130 zu erfassen, die auf Zuflüsse und Abflüsse von Wärmemengen zur bzw. von der Wärmespeichereinheit 110 hinweisen. Die Steuereinheit 140 ist ferner dazu vorgesehen, auf der Grundlage der von der Sensoreinheit 130 erfassten Wärmemengenflüsse, den Ladezustand bzw. Entladezustand der Wärmespeichereinheit 110 zu bestimmen. Die Steuereinheit 140 ist ferner dazu vorgesehen, auf der Grundlage des bestimmten Entladezustands bzw. Ladezustands der Wärmespeichereinheit 110 die Energieumwandlungseinheit 120 derart anzusteuern, dass die Energieumwandlungseinheit 120 eine vorgegebene elektrische Energiemenge vom Stromnetz 10 abgreift, die einer umgewandelten Wärmemenge entspricht, die zur vollen oder zumindest teilweisen Aufladung der Wärmespeichereinheit 110 führt.

Die Steuereinheit 140 ist ferner mit dem Empfänger 150 gekoppelt, um ein Signal Sᵢₙ von der zentralen Energieerzeugungseinrichtung 200 zu erhalten (und auszuwerten). Ferner kann die Steuereinheit 140 mit dem Sender 160 gekoppelt sein, um ein von der Steuereinheit 140 erzeugtes Responsesignal Sₒᵤₜ der Energieerzeugungseinrichtung 200 zu senden.

Zur Durchführung der oben beschriebenen Funktionen weist die Steuereinrichtung 140 einen Prozessor und eine Speicher auf. Im Speicher werden die Kommunikationssignale sowie die Messwerte zwischengespeichert. Der Prozessor ist zur Abarbeitung der Steuerfunktionen vorgesehen.

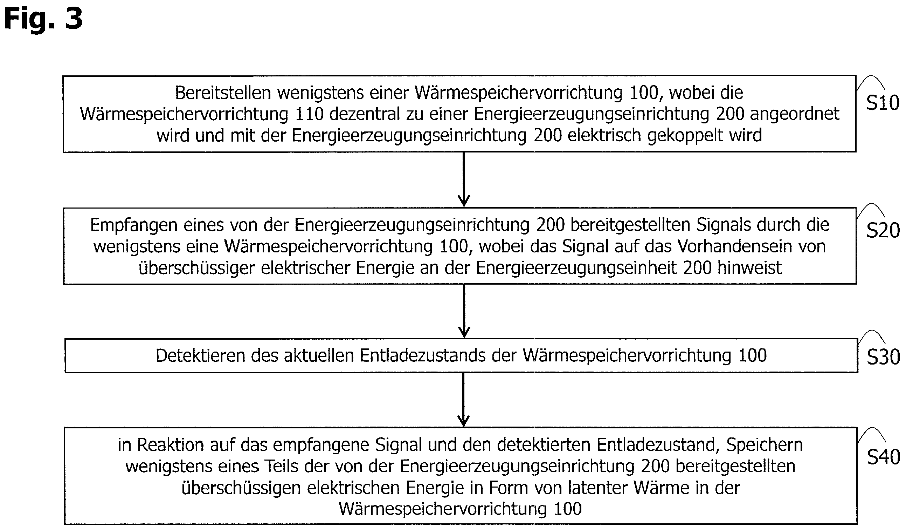

In Zusammenhang mit Figur 3 wird ein erfindungsgemäßes Verfahren zum dezentralen Speichern von Energie in einem bestehenden, konventionellen Stromnetz (wie beispielsweise in Figur 1 dargestellt) beschrieben. Das in der Figur 3 dargestellte Verfahren wird mit Hilfe der in Figur 2 gezeigten Wärmespeichervorrichtung 100 implementiert.

Gemäß einem ersten Schritt wird wenigstens eine Wärmespeichervorrichtung 100 bereitgestellt. Mit Bereitstellung ist die Kopplung der wenigstens einen Wärmespeichervorrichtung 100 mit dem Stromnetz 10 gemeint. Die wenigstens eine bereitgestellte Wärmespeichervorrichtung 100 entspricht in ihren Komponenten und Eigenschaften der in Zusammenhang mit Figur 2 beschriebenen Wärmespeichervorrichtung. Die wenigstens eine Wärmespeichervorrichtung 100 ist in dem bestehenden Stromnetz 10 dezentral zur Energieerzeugungseinrichtung 200 angeordnet. Dezentral bedeutet, dass die Wärmespeichervorrichtung 200 in oder in der Nähe eines Endverbrauchers im Stromnetz 10 angeordnet ist, wie in Figur 1 dargestellt ist. Die Wärmespeichervorrichtung 100 ist über das bestehende (konventionelle) Stromnetz 10 in elektrischer Verbindung mit der zentral angeordneten Energieerzeugungseinrichtung 200.

In einem weiteren Schritt S20 wird mittels des Empfängers 150 der Wärmespeichervorrichtung 100 ein von der Energieerzeugungseinrichtung 200 bereitgestelltes Signal Sᵢₙ empfangen. Das Signal Sᵢₙ weist auf das Vorhandensein von überschüssiger elektrischer Energie an der Energieerzeugungseinrichtung 200 hin. Mit anderen Worten wird das Signal Sᵢₙ von der Energieerzeugungseinrichtung 200 immer dann ausgesendet, wenn überschüssige elektrische Energie an der Energieerzeugungseinrichtung 200 bereitsteht, die von keinem Verbraucher im Stromnetz unmittelbar benötigt wird.

In einem darauffolgenden Schritt S30 wird mit Hilfe der Sensoreinheit 130 und der Steuereinheit 140 der Wärmespeichervorrichtung 100 der aktuelle Entladezustand bzw. Ladezustand der Wärmespeichervorrichtung 100 (genauer gesagt der Wärmespeichereinheit 110) detektiert. Der Schritt des Detektierens kann hierbei ein Auslesen der Sensoreinheit 130 umfassen, die den Wärmezufluss zur Wärmespeichereinheit 110 sowie Wärmeabfluss von der Wärmespeichereinheit 110 misst. Der Schritt des Detektierens kann ferner ein Berechnen des Entladezustands bzw. Ladezustands aus dem gemessenen Wärmezufluss und Wärmeabfluss mit Hilfe der Steuereinheit 140 umfassen. Die Berechnung des Entladezustands kann beispielsweise durch Differenzbildung von gemessenen Wärmezufluss und Wärmeabfluss ermittelt werden. Der Schritt des Detektierens kann in Reaktion auf ein empfangenes Signal Sᵢₙ hin durchgeführt werden.

Abhängig von dem detektierten Entladezustand bzw. Ladezustand und in Reaktion auf das empfangene Signal Sᵢₙ wird in einem darauffolgenden vierten Schritt S40 durch die Steuereinheit 140 entschieden, ob ein Teil der von der Energieerzeugungseinrichtung 200 bereitgestellten überschüssigen Energie in Form von latenter Wärme in der Wärmespeichereinheit 110 gespeichert werden soll. Stellt hierbei die Steuereinheit 140 auf der Grundlage der Messsignale der Sensoreinheit 130 fest, dass der Entladezustand bzw. der Ladezustand der Wärmespeichereinheit 110 einen vorgegebenen Schwellenwert überschreitet, so berechnet die Steuereinheit 140 die Energiemenge, die durch die teilweise oder ganz entladene Wärmespeichereinheit 110 gespeichert werden kann. Auf der Grundlage dieser Berechnung steuert die Steuereinheit 140 die Energieumwandlungseinheit 120 an, dem Stromnetz 10 jene Energiemenge zu entziehen, welche benötigt wird, um die Wärmespeichereinheit 110 ganz oder zumindest teilweise wieder aufzuladen.

Die Steuereinheit 140 kann ferner in Reaktion auf das empfangene Signal Sᵢₙ der Energieerzeugungseinrichtung 200 ein Responsesignal Sₒᵤₜ über den Sender 160 an die Energieerzeugungseinrichtung 200 senden. Das Responsesignal Sₒᵤₜ kann hierbei eine Information enthalten, die auf die Energiemenge hinweist, die die Wärmespeichervorrichtung 100 bereit ist abzugreifen und in Form von latenter Wärme zu speichern. Alternativ ist auch denkbar, dass die Energieerzeugungseinrichtung 200 in dem Signal Sᵢₙ eine von der Energieerzeugungseinrichtung 200 vorgegebene Menge an elektrischer Energie anbietet. Die Steuereinheit 140 kann dann auf der Grundlage des erfassten Entladezustands der Wärmespeichereinheit 110 entscheiden, ob sie die von der zentralen Energieerzeugungseinrichtung 200 angebotene Energiemenge abgreifen und in Form von latenter Wärme zwischenspeichern möchte. In diesem Fall kann das Responsesignal 160 lediglich eine auf die Annahme oder Ablehnung des Angebots hinweisende Information umfassen.

Gemäß einer Implementierung kann im Stromnetz 10 eine Vielzahl der oben beschriebenen Wärmespeichervorrichtungen 100 vorgesehen sein, wobei das in Zusammenhang mit Figur 3 beschriebene Verfahren in jeder der Vielzahl von Wärmespeichervorrichtungen 100 implementiert ist. Die Vielzahl der Wärmespeichervorrichtungen 100 bildet somit ein dezentral angeordnetes Wärmespeichersystem oder Wärmespeichercluster. Jede der Vielzahl von Wärmespeichervorrichtungen 100 ist in Kommunikation mit der wenigstens einen im Stromnetz 10 vorgesehenen Energieerzeugungseinrichtung 200 und kann mit dieser kommunizieren. Bei an der wenigstens einen Energieerzeugungseinrichtung 200 auftretenden Energieproduktionsspitzen kann die Energieerzeugungseinrichtung 200 ein auf die Energieproduktionsspitzen hinweisendes Signal Sᵢₙ an jede der Wärmespeichervorrichtungen 100 senden. Jede der Vielzahl von Wärmespeichervorrichtungen 100 kann dann auf der Grundlage des für jede Wärmespeichervorrichtung 100 gemessenen Entladezustands entscheiden, ob und wieviel Energie sie abnehmen möchte, um elektrische Energie in Form von latenter Wärme zwischen zu speichern.

Die hier beschriebene Erfindung ermöglicht das Speichern von überschüssiger elektrischer Energie in Form von Wärmeenergie dezentral in der Nähe des Endverbrauchers. Die hier beschriebene dezentrale Speichertechnik ist ferner angebotsgesteuert und nicht bedarfsgesteuert (on demand), wie in herkömmlichen Stromnetzen 10. Produzierte Energieüberschüsse können somit schnell und flexibel auf einige oder viele Wärmespeichervorrichtungen 100 im Netz verteilt werden. Elektrische Energieproduktionsspitzen können somit effizient ausgenutzt werden.

Die Flexibilität der hier beschriebenen dezentralen Energiespeichertechnik steigt mit der Anzahl der bereitgestellten Wärmespeichervorrichtungen 100 im Netz. Wird eine Vielzahl von Wärmespeichervorrichtungen 100 (z.B. mehrere hundert oder tausend Wärmespeichervorrichtungen) bereitgestellt und miteinander verclustert, so steigt natürlich die Gesamtspeicherkapazität. Ein Cluster von Wärmespeichervorrichtungen kann somit auch Energieproduktionsspitzen von großen Stromerzeugungseinrichtungen Zwischenspeichern. Ferner ist die Verclusterung der Wärmespeichervorrichtungen vorteilhaft, da ein Ausfall einer Wärmespeichervorrichtung 100 (beispielsweise durch einen Defekt oder eine Wartung) durch das Vorhandensein der restlichen Wärmespeichervorrichtungen 100 gut kompensiert werden kann.

Da ferner jede bereitgestellte Wärmespeichervorrichtung 100 als Latentwärmespeichervorrichtung ausgebildet ist, besteht ein weiterer Vorteil darin, dass überschüssige elektrische Energie langfristig, möglichst verlustfrei und ohne große Abnützung gespeichert werden kann. Möglich auftretende Verluste sind in erster Linie durch die Energieumwandlung von elektrischer in thermische Energie bedingt. Die Speicherung der elektrischen Energie in Form von latenter Wärme hat einen weiteren Vorteil gegenüber chemischen Speicherzellen. Denn Latentwärmespeicher auf der Grundlage von Salzhydraten degenerieren nicht (keine Memory-Effekte) und sind beliebig oft entlad- bzw. aufladbar. Die Speicherkapazität der Wärmespeichervorrichtung 100 nimmt hier nicht nennenswert ab. Insofern wird durch die hier beschriebene Erfindung eine robuste und langlebige Technik bereitgestellt, welche zudem im Vergleich zu chemischen Speicherzellen kostengünstig ist.

## Patentansprüche

1. Verfahren zum dezentralen Speichern von Energie, die durch wenigstens eine zentral angeordnete Energieerzeugungseinrichtung (200) zur Erzeugung von elektrischer Energie bereitgestellt wird, wobei das Verfahren folgende Schritte umfasst:
Bereitstellen wenigstens einer Wärmespeichervorrichtung (100), wobei die Wärmespeichervorrichtung (100) dezentral zur Energieerzeugungseinrichtung (200) angeordnet wird und mit der Energieerzeugungseinrichtung (200) elektrisch gekoppelt wird;
Empfangen eines von der Energieerzeugungseinrichtung (200) bereitgestellten Signals durch die wenigstens eine Wärmespeichervorrichtung (100), wobei das Signal auf das Vorhandensein von überschüssiger elektrischer Energie an der Energieerzeugungseinrichtung (200) hinweist;
Detektieren des aktuellen Entladezustands der Wärmespeichervorrichtung (100); und
in Reaktion auf das empfangene Signal und den detektierten Entladezustand, Speichern wenigstens eines Teils der von der Energieerzeugungseinrichtung (200) bereitgestellten überschüssigen elektrischen Energie in Form von latenter Wärme in der Wärmespeichervorrichtung (100).

2. Verfahren nach Anspruch 1, wobei der Schritt des Speicherns ferner ein Abgreifen und Umwandeln der elektrischen Energie in Wärmeenergie umfasst.

3. Verfahren nach einem der vorhergehenden Ansprüche, wobei die elektrische Kopplung zwischen der zentral angeordneten Energieerzeugungseinrichtung (200) und der wenigstens einen dezentral angeordneten Wärmespeichervorrichtung (100) über ein konventionelles Stromnetz (10) erfolgt.

4. Verfahren nach einem der vorhergehenden Ansprüche, wobei die überschüssige Energie elektrische Energiespitzen umfasst, die bei der Erzeugung elektrischer Energie durch regenerative Stromerzeugungsquellen auftreten.

5. Verfahren nach einem der vorhergehenden Ansprüche, wobei der wenigstens eine Teil der von der Energieerzeugungseinrichtung (200) bereitgestellten überschüssigen elektrischen Energie nur dann in Form von Wärme gespeichert wird, wenn der Entladezustand wenigstens einen vorgegebenen Schwellenwert erreicht oder übersteigt.

6. Verfahren nach einem der vorhergehenden Ansprüche, wobei der Schritt des Detektierens des aktuellen Entladezustands der Wärmespeichervorrichtung (100) in Reaktion auf das empfangene Signal hin durchgeführt wird.

7. Verfahren nach einem der vorhergehenden Ansprüche, ferner umfassend bedarfsabhängiges Bereitstellen der in der wenigstens einen Wärmespeichervorrichtung (100) gespeicherten Wärmeenergie an einen lokalen Endverbraucher.

8. Verfahren nach einem der vorhergehenden Ansprüche, wobei eine Vielzahl von dezentral angeordneten und mit der Energieerzeugungseinrichtung (200) elektrisch gekoppelten Wärmespeichervorrichtungen (100) bereitgestellt werden,
und wobei jede der Vielzahl der Wärmespeichervorrichtungen (100) das von der Energieerzeugungseinrichtung (200) bereitgestellte Signal empfängt, seinen aktuellen Entladezustand detektiert, und in Reaktion auf das empfangene Signal und seinen detektierten Entladezustand, wenigstens einen Teil der von der Energieerzeugungseinrichtung (200) bereitgestellten überschüssigen elektrischen Energie in Form von Wärmeenergie speichert.

9. Wärmespeichervorrichtung (100), wobei die Wärmespeichervorrichtung (100) über ein Stromnetz (10) mit wenigstens einer zentral angeordneten Energieerzeugungseinrichtung (200) zur Erzeugung von elektrischer Energie koppelbar ist, und wobei die Wärmespeichervorrichtung (100) umfasst:
einen Empfänger (150), der dazu ausgebildet ist, ein von der Energieerzeugungseinrichtung (200) bereitgestelltes Signal zu empfangen, wobei das Signal auf das Vorhandensein von überschüssiger elektrischer Energie an der Energieerzeugungseinrichtung (200) hinweist;
eine Sensoreinheit (130), die dazu ausgebildet ist, einen aktuellen Entladezustand der Wärmespeichervorrichtung (100) zu detektieren;
eine Wärmespeichereinheit (110), die dazu ausgebildet ist, Wärmeenergie in Form von latenter Wärme zu speichern; und
eine Steuereinheit (140), die dazu ausgebildet ist, auf der Grundlage des empfangenen Signals und des detektierten Entladezustands, die Wärmespeichereinheit (110) derart anzusteuern, dass sie wenigstens einen Teil der von der Energieerzeugungseinrichtung (200) bereitgestellten überschüssigen elektrischen Energie in Form von latenter Wärme speichert.

10. Wärmespeichervorrichtung (100) nach Anspruch 9, ferner umfassend eine Energieumwandlungseinheit (120), die dazu ausgebildet ist, elektrische Energie in Wärmeenergie zu wandeln.

11. Wärmespeichervorrichtung (100) nach Anspruch 10, wobei die Steuereinheit ferner dazu ausgebildet ist, in Reaktion auf das erfasste Signal und den detektierten Entladungszustand die Energieumwandlungseinheit (120) derart anzusteuern, dass sie wenigstens einen Teil der im Stromnetz (10) bereitgestellten überschüssigen elektrischen Energie abgreift und in Wärmeenergie umwandelt.

12. System zur dezentralen Speicherung von elektrischer Energie in Form von Wärmeenergie, wobei das System eine Vielzahl von Wärmespeichervorrichtungen (100) gemäß einem der Ansprüche 9 bis 11 umfasst, wobei die Vielzahl der Wärmespeichervorrichtungen (100) dezentral zu einer elektrischen Energieerzeugungseinrichtung (200) angeordnet sind und mit dieser über ein Stromnetz (10) elektrisch gekoppelt sind.

13. System nach Anspruch 12, wobei jede der Wärmespeichervorrichtungen (100) bei einem Energieendverbraucher angeordnet ist.

14. System nach Anspruch 12 oder 13, ferner umfassend die Energieerzeugungseinrichtung (200) zur Erzeugung der elektrischen Energie.
